# EUROPÄISCHE PATENTANMELDUNG

(11) **EP 1 452 796 A1**
(43) Veröffentlichungstag der Anmeldung: **01.09.2004**
(21) Anmeldenummer: 03000790.0
(22) Anmeldetag: 26.02.2003
(51) Int. Cl.: F21S 11/00, F21V 17/02, F21V 14/04, A01G 9/24, A01G 7/04

(54) **Verfahren zum gezielten und geregelten Ausleuchten von Orten jeglicher Art und zum Optimieren der Lichtintensität**

(71) Anmelder: Sommerfeld, Erwin, 26188 Friedrichshafen (DE); Sommerfeld, Frank, 26188 Friedrichshafen (DE)
(72) Erfinder: Sommerfeld, Erwin, 26188 Friedrichshafen (DE); Sommerfeld, Frank, 26188 Friedrichshafen (DE)

(57) **Zusammenfassung**

Mit der Erfindung soll ein Verfahren durchgeführt werden, das ein gezieltes Ausleuchten von Orten oder Flächen mit Licht (Tageslicht usw.) auf bestimmbaren Orten und Flächen jeglicher Art, z. B. Freiflächen, Sportflächen, Flächen in Stadien, in Gebäuden, in Gewächshäusern usw. erreicht wird. Des Weiteren soll eine Temperatur-Regelung, z. B. bei zu großer bzw. zu geringer Wärmezufuhr, hervorgerufen durch zu große bzw. zu geringere Sonnenintensität, d. h. durch überhöhte bzw. zu geringe Sonneneinwirkung die Flächen vor Schäden rechtzeitig bewahren und diese stets unter optimale Bedingungen stellen, also letztendlich alle schädlichen Einflüsse (z. B. am Firmament aufziehende Kumulus-Wolken mit geregelten Spiegeln auf die im wandernden Schatten liegenden Flächen beizeiten gezielt auszuleuchten) zu kompensieren.

Das Verfahren betrifft Licht (Sonnenlicht usw.) durch Reflexion an Orte bzw. Flächen zu bringen, die sonst nicht bzw. schwierig zu erreichen sind. Es sollen die Flächen unter optimale Bedingungen gestellt werden, d. h. es wird hier eine bessere, eine geregelte Lichtmenge, also ein kontrolliertes Ausleuchten erreicht, als dies unter regulären natürlichen Verhältnissen möglich ist.

Diese geregelte und kontrollierte Lichtmenge wird mit Hilfe von Spiegeln oder speziellen Reflektoren (1) mit einer besonderen Anordnung, die dem Sonnenstand unter der Sphäre, der Umlaufbahn der Erde und der Erdrotation durch besondere Steuerungsprogramme manuell, mechanisch, automatisch oder mit Rechnerunterstützung angepasst. Somit wird stets die optimal mögliche reflektierte Lichtmenge den Flächen (4) zur Verfügung gestellt, wiederum aber bei zuviel bzw. zu geringer Sonnenintensität diese geregelt und somit ein kontrolliertes Verhältnis erzielt.

Dies erübrigt z. B. weitestgehend das unnötige und häufige kostspielige Abtragen oder das neue Anlegen von Flächen und Böden..

## Beschreibung

Mit Hilfe von Licht soll ein gezieltes Ausleuchten von Orten oder Flächen erreicht werden. Tageslicht bzw. Sonnenlicht hat eine Lichtstärke von 70 000 lx bis 100 000 lx, indirektes Licht 2 000 lx bis 10 000 lx, und mit Spiegeln werden je nach Qualität Werte von mehr als 10 000 lx erreicht. Im Vergleich zum Tageslicht hat die Wohnraumbeleuchtung 100 bis 200 lx und die einer Leselampe 300 lx.

Des weiteren wird hierbei gleichzeitig eine nicht unbedeutende Wärmemenge hervorgerufen und zugeführt.

Das Licht und die Temperatur sind für das Leben zwei wichtige Faktoren der allgemeinen Lebensbedingungen. Dies lässt sich am einfachsten am Beispiel der Pflanzenwelt darstellen. Für das Wachstum sind diese besonders wichtig. Licht und Temperatur haben neben den anderen Wachstumsfaktoren entscheidenden Einfluss auf die fotosynthetische Entwicklung der Pflanzen. Die im Schatten oder in dunklen Umgebungen liegenden Pflanzen zeigen in ihrem Wachstumsverhalten einen deutlich sichtbaren Unterschied gegenüber denen, die mit genügend Licht und Temperatur versorgt werden. Bei Licht- und Temperaturmangel kommt es zu physiologischen Störungen innerhalb des Stoffwechsels, und das Regenerieren des Bodens und der Pflanzen unterbleibt, d.h. die Keimung, die Blütenbildung und das Aktivieren der nützlichen Organismen wird geschwächt. Auch die Bildung von Pilzen und vielen unerwünschten anderen Keimen wird hierdurch reduziert oder teilweise sogar verhindert bzw. bei den nützlichen Organismen gefördert.

Es wird mit diesem Verfahren eine bessere Qualität durch dosierte Quantität dieser so wichtigen ergänzenden Licht- und Temperatur-Faktoren, d.h. ausgewogenere Lebensbedingungen, für das Leben und Wachstum geschaffen.

Mit normalen und besonders beschichteten und aus besonderen Material bestehenden in ihrer Lage geregelten Spiegeln, wird das Tageslicht (gilt als ein relativ hartes Licht) auf die im Schatten liegenden Flächen bzw. in die abgedunkelten Räume gelenkt und von den Körpern (Decken, Wände, Lamellen usw.) durch Absorption reduziert, gestreut und vermindert. Es wird also eine geregelte, gewollte weichere Reflexion des Tageslichts erreicht und dies führt zwangsläufig zu einer besseren Ausleuchtung, die für das Auge als angenehmer empfunden wird, sie wirkt ruhig und doch anregend. Es wird hierdurch also ein besonderes Milieu geschaffen, eine bessere physiologische Umwelt und im weitesten Sinn sogar eine bessere soziale Umgebung für die Menschen in der Freizeit, im Alltag und im Berufsleben durch die teilweise optimierten Arbeitsbedingungen.

Für die Umwelt bedeutet dieses Verfahren eine unermessliche Schonung der Ressourcen durch Energieeinsparung. Weiterhin führt dieses zwangsläufig zu geringeren Umweltauflagen und somit zu weniger Umweltabgaben, die in der Ökonomie von großen Nutzen sein werden.

### Bezugszeichenliste:

- 1): Spiegel
- 2): Gelenk bzw. kardanisches Gelenk
- 3): Sonnenstrahl
- 4): Pflanzenboden
- 5): Tragkonstruktion des Daches z.B. Tribünendach usw.
- 6): Spiegel (Spezial Material)
- 7): Hohl-Spiegel, gekrümmter Spiegel
- 8): Licht-Kanone
- 9): Leuchtballon

## Patentansprüche

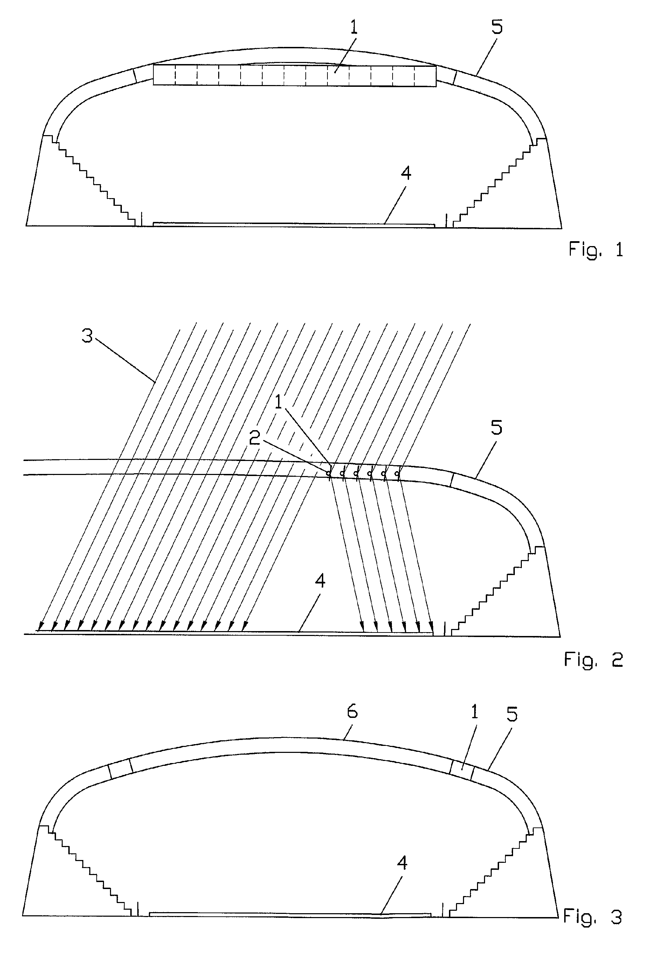

1. Verfahren Fig. 1; Fig. 2; Fig. 3; Fig. 4; Fig. 5; Fig. 6; Fig. 7; Fig. 8 und Fig. 9, **dadurch gekennzeichnet, dass** ein gezieltes Ausleuchten von Orten oder Flächen mit Licht (Tageslicht usw.) auf bestimmbaren Orten oder Flächen jeglicher Art, z. B. Freiflächen, Sportflächen, Flächen in Stadien, in Gebäuden, in Gewächshäusern usw., des Weiteren eine TemperaturRegelung, z. B. durch zu große bzw. eine zu geringe Sonnenintensität erreicht wird.

2. nach Anspruch 1, **dadurch gekennzeichnet, dass** durch die spezielle Art und durch die Anordnung von ebenen durchgehenden Spiegeln nach Fig. 1 und Fig. 2, die dem Sonnenstand unter der Sphäre manuell, mech., automatisch oder über einen Rechner ständig angepasst werden und somit stets die optimal erforderliche reflektierte Lichtmenge den Flächen zur Verfügung stellen. Die Anzahl der Spiegel richtet sich nach der Lage und Größe der Flächen.

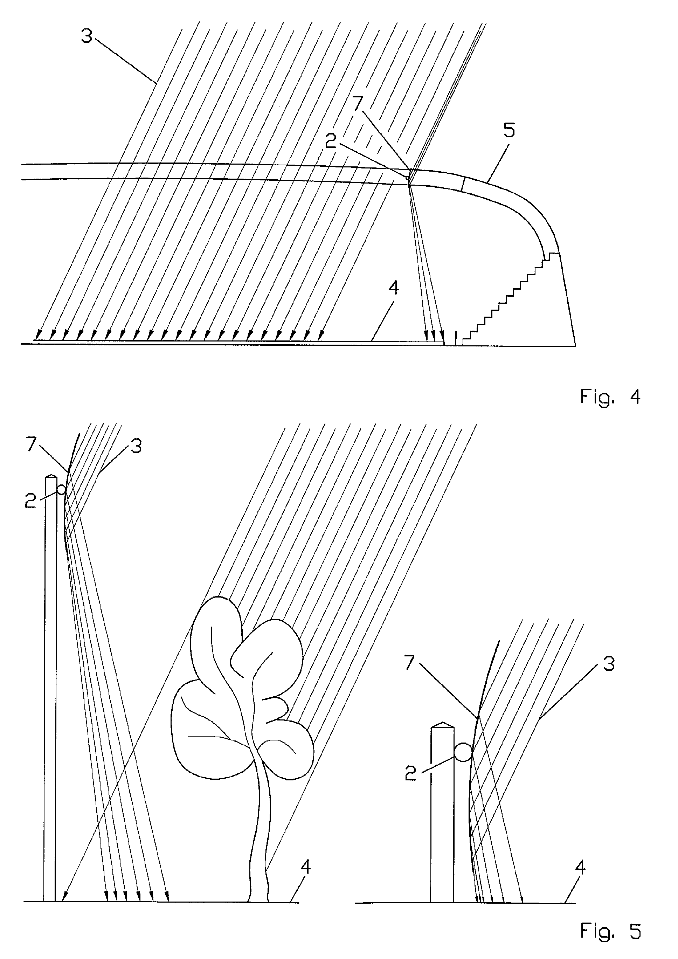

3. nach Anspruch 1, **dadurch gekennzeichnet, dass** durch die spezielle Art eines im Dach integrierten Spiegels, nach Fig. 3 - der gleichzeitig das Dachabschluss-Segment bildet und der Reflektor aus einem Spezial-Material besteht - die dem Sonnenstand manuell, mechanisch, automatisch, oder über einen Rechner ständig angepasst werden und somit stets die optimal erforderliche reflektierte Lichtmenge den Flächen zur Verfügung stellen.
Dieser Spezial-Reflektor ist ab einem bestimmten Stellungs- bzw. Schliess-Winkel lichtdurchlässig, er schliesst gleichzeitig das Dach und lässt also im geschlossenen Zustand das Tageslicht kontrolliert einfallen. Weiterhin gibt er bei erhöhter Sonneneinwirkung in bestimmten Spiegel-Zonen, dies ist wichtig in der Mittagszeit oder in südlichen Ländern, eine geringere, je nach Sonnen-Intensität in der jeweiligen Spiegelzone, stets eine angepasste reflektierte Lichtmenge auf die Flächen ab.

4. nach Anspruch 1, **dadurch gekennzeichnet, dass** durch die Anordnung von beweglichen (kardanisch) aufgehängten geteilten Flach-Spiegeln Fig. 1 und Fig. 2 die dem Sonnenstand unter der Sphäre, der Umlaufbahn der Erde und der Erdrotation manuell, mechanisch, automatisch, oder über einen Rechner angepaßt werden und somit stets die optimal mögliche reflektierte Lichtmenge den Flächen zur Verfügung stellen.

5. nach Anspruch 1, **dadurch gekennzeichnet, dass** durch die Anordnung von kardanisch aufgehängten Hohl-Spiegeln Fig. 4 oder Hohl-Spiegeln mit optimierter Krümmung nach Fig. 3, die dem Sonnenstand unter der Sphäre, der Umlaufbahn der Erde und der Erdrotation manuell, mechanisch automatisch, oder über einen Rechner angepaßt werden und somit stets die optimal erforderliche reflektierte Lichtmenge den Flächen zur Verfügung stellen.

6. nach Anspruch 1, **dadurch gekennzeichnet, dass** eine kardanisch angeordnete Lichtkanone Fig. 5 gebündeltes Licht mechanisch oder automatisch über einen Rechner mit S-förmigen Schleifen oder sonstige spezielle Schleifen-Programme über die Flächen gleiten lässt und somit stets die optimal erforderliche Lichtmenge den Flächen zur Verfügung stellt.

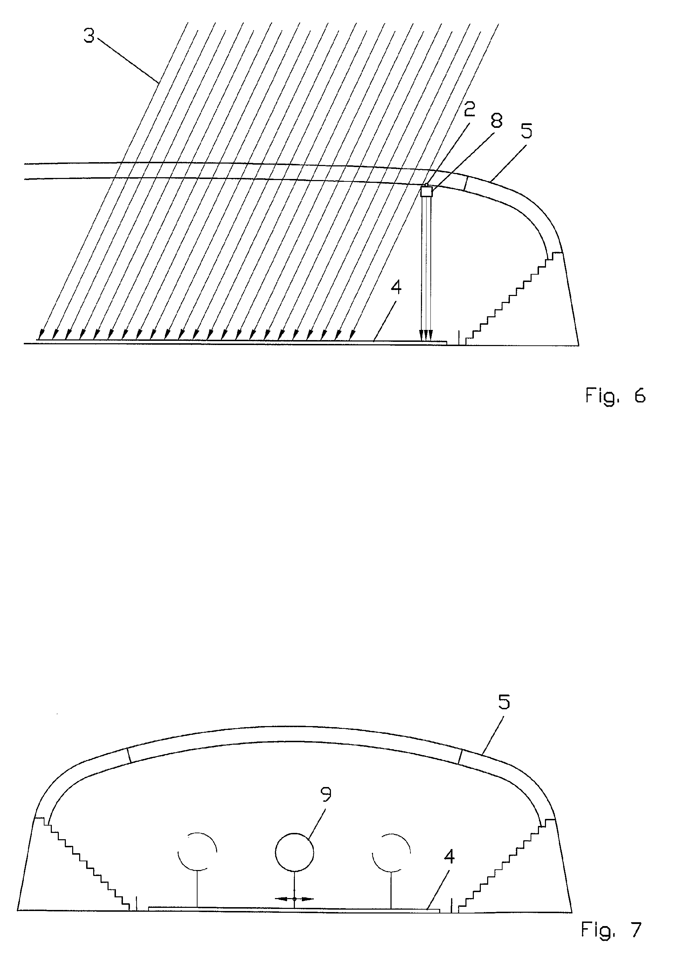

7. nach Anspruch 1, **dadurch gekennzeichnet, dass** ein oder mehrere angeordnete Leuchtballons nach Fig. 6 mit S-förmigen Schleifen über die Fläche nach einem Programm gleiten oder bei mehreren Leuchtballons diese örtlich unveränderlich einen festen Platz einnehmen.
